(19)

Europäisches
Patentamt
European
Patent Office
Office européen
des brevets

(11) **EP 2 287 810 A1**

(12) **EUROPEAN PATENT APPLICATION**
published in accordance with Art. 153(4) EPC

(43) Date of publication:
**23.02.2011 Bulletin 2011/08**

(21) Application number: **09753476.2**

(22) Date of filing: **25.05.2009**

(51) Int Cl.:
***G06T 17/00*** (2006.01)

(86) International application number:
**PCT/CN2009/071949**

(87) International publication number:
**WO 2009/143758 (03.12.2009 Gazette 2009/49)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **28.05.2008 CN 200810098276**

(71) Applicant: **HUAWEI DEVICE CO., LTD
Shenzhen, Guangdong 518129 (CN)**

(72) Inventors:
• **ZHONG, Hui
Guangdong518129 (CN)**
• **LI, Kai
Guangdong 518129 (CN)**

(74) Representative: **Pfenning, Meinig & Partner GbR
Patent- und Rechtsanwälte
Theresienhöhe 13
80339 München (DE)**

(54) **METHOD AND MEDIA PLAYER FOR PLAYING IMAGE IN SYNCHRONISM WITH AUDIO FILE**

(57)     A method and a media player for playing images synchronously with an audio file are provided. The method includes the following steps. Audio file associated parameters are read according to a preset time interval when an audio file is played. Stereoscopic image associated parameters corresponding to the read audio file associated parameters are generated according to a preset first corresponding relation between the audio file associated parameters and the stereoscopic image associated parameters. Stereoscopic images corresponding to the audio file are generated according to the stereoscopic image associated parameters, and the stereoscopic images are played. Through the method and media player, stereoscopic images can be played synchronously when an audio file is played.

```
┌─────────────────────────────────────────────┐
│ Read audio file associated parameters        │    101
│ according to a preset time interval when     │
│ an audio file is played                      │
└─────────────────────────────────────────────┘
                      │
                      ▼
┌─────────────────────────────────────────────┐
│ Generate stereoscopic image associated       │
│ parameters corresponding to the audio file   │
│ associated parameters according to a preset  │    102
│ first corresponding relation between the     │
│ audio file associated parameters and the     │
│ stereoscopic image associated parameters     │
└─────────────────────────────────────────────┘
                      │
                      ▼
┌─────────────────────────────────────────────┐
│ Generate stereoscopic images corresponding   │    103
│ to the audio file according to the           │
│ stereoscopic image associated parameters,    │
│ and play the stereoscopic images             │
└─────────────────────────────────────────────┘
```

FIG. 1

EP 2 287 810 A1

**Description**

The application claims the benefit of priority to China Patent Application No. 200810098276.2, filed on May 28, 2008, and entitled "METHOD AND MEDIA PLAYER FOR PLAYING IMAGES SYNCHRONOUSLY WITH AUDIO FILE", which is incorporated herein by reference in its entirety.

**FIELD OF THE TECHNOLOGY**

The present invention relates to the field of video playing, and more particularly to a method and a media player for playing images synchronously with an audio file.

**BACKGROUND OF THE INVENTION**

When a current PC music player or home power amplifier plays an audio file, a plane image associated with the audio file is displayed on a screen or liquid crystal panel, which is used to indicate the tempo of the audio file. For example, When Windows Media Player used in a Microsoft operating system plays an audio file, different images can be displayed simultaneously, and the images can change as the audio file changes. The principle is that, when the audio file is played, the images vary with the scale or tone of each moment in terms of chroma, luminance, saturation, and contrast, so as to present images which are associated with the audio file and change continuously.

Image forms provided for a user by such an existing method for playing images synchronously with an audio file are limited.

**SUMMARY OF THE INVENTION**

Accordingly, the present invention is directed to a method for playing images synchronously with an audio file, which can play stereoscopic images synchronously when an audio file is played.

The present invention is further directed to a media player for playing images synchronously with an audio file, which can play stereoscopic images synchronously when an audio file is played.

Technical solutions of the present invention are implemented according to the following.

A method for playing images synchronously with an audio file is provided, which includes the following steps.

Audio file associated parameters are read according to a preset time interval when an audio file is played.

Stereoscopic image associated parameters corresponding to the read audio file associated parameters are generated according to a preset first corresponding relation between the audio file associated parameters and the stereoscopic image associated parameters.

Stereoscopic images corresponding to the audio file are generated according to the stereoscopic image associated parameters, and the stereoscopic images are played.

A media player for playing images synchronously with an audio file is provided, which includes a reading module, a parameter generating module, an image generating module, and a playing module.

The reading module is adapted to read audio file associated parameters according to a preset time interval when an audio file is played.

The parameter generating module is adapted to generate stereoscopic image associated parameters corresponding to the audio file associated parameters read by the reading module according to a preset first corresponding relation between the audio file associated parameters and the stereoscopic image associated parameters.

The image generating module is adapted to generate stereoscopic images corresponding to the audio file according to the stereoscopic image associated parameters generated by the parameter generating module.

The playing module is adapted to play the stereoscopic images generated by the image generating module.

It can be seen that, when an audio file is played, the method and media player of the present invention can synchronously generate corresponding stereoscopic images of which the depths vary with the scale or tone of the audio file, and play the generated stereoscopic images.

**BRIEF DESCRIPTION OF THE DRAWINGS**

FIG. 1 is a flow chart of a method for playing images synchronously with an audio file according to an embodiment of the present invention;

FIG. 2 is a flow chart of a specific implementation for playing images synchronously with an audio file according to an embodiment of the present invention; and

FIG. 3 is a schematic structural view of a media player for playing images synchronously with an audio file according to an embodiment of the present invention.

**DETAILED DESCRIPTION OF THE EMBODIMENTS**

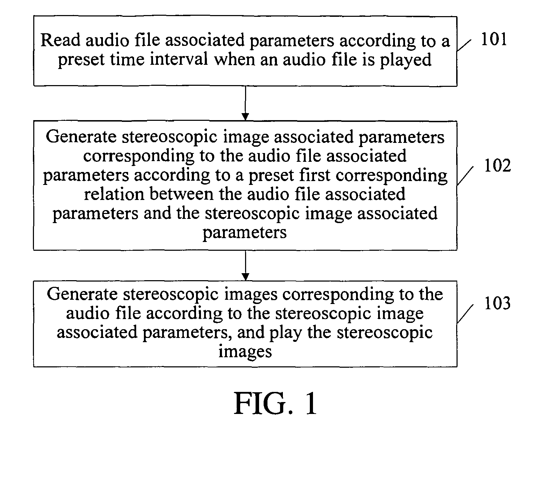

According to an embodiment, the present invention provides a method for playing images synchronously with an audio file. FIG. 1 is a flow chart of a method for playing images synchronously with an audio file according to an embodiment of the present invention. Referring to FIG. 1, the method includes the following steps.

In Step 101, audio file associated parameters are read according to a preset time interval when an audio file is played.

In Step 102, stereoscopic image associated parameters corresponding to the read audio file associated parameters are generated according to a preset first corresponding relation between the audio file associated parameters and the stereoscopic image associated parameters.

In Step 103, stereoscopic images corresponding to the audio file are generated according to the stereoscopic image associated parameters, and the stereoscopic images are played.

In the method, the audio file associated parameters may include: scale and/or tone, and the stereoscopic image associated parameters may include depth and at least one of chroma, luminance, saturation, and contrast.

The first corresponding relation between the audio file associated parameters and the stereoscopic image associated parameters may be set by a user himself/herself, or given by a system at random. For example, corresponding magnitudes of the depth, chroma, and luminance are obtained respectively according to the strength of a tone that is read, and the strength of the tone is in direct proportion to the magnitudes of the depth, chroma, and luminance, that is:

$$\text{depth corresponding to each music node} = K1 \times \text{tone}$$

$$\text{chroma corresponding to each music node} = K2 \times \text{tone}$$

$$\text{luminance corresponding to each music node} = K3 \times \text{tone}$$

in which, ratio factors K1, K2, and K3 may be greater than 0.

Before Step 101, the method may further include: determining whether a user requires playing stereoscopic images, and if the user requires playing stereoscopic images, reading the audio file associated parameters. In this way, the user may choose whether to play the stereoscopic images according to the desire of the user.

In the method, after the generating the stereoscopic images, the method may further include: storing the stereoscopic images. By storing the generated stereoscopic images, when the same audio file is played next time, the previously stored stereoscopic images can be directly read and played, so that it does not need to generate the corresponding stereoscopic images repeatedly each time the audio file is played.

Before Step 101, the method may further include: determining whether stereoscopic images corresponding to the audio file are stored, and if stereoscopic images corresponding to the audio file are stored, playing the stored stereoscopic images when the audio file is played; otherwise, proceeding to read the audio file associated parameters.

If two-dimensional images corresponding to the audio file are pre-stored, corresponding stereoscopic images may also be generated according to the two-dimensional images. That is, after determining that the stereoscopic images corresponding to the audio file are not stored, and before reading the audio file associated parameters, the method may further include: determining whether two-dimensional images corresponding to the audio file are stored, and if yes, generating stereoscopic images corresponding to the two-dimensional images according to a preset second corresponding relation between two-dimensional image associated parameters and stereoscopic image associated parameters, and playing the stereoscopic images; otherwise, proceeding to read the audio file associated parameters.

The second corresponding relation may be a corresponding relation between amplitude of a two-dimensional image waveform and depth. A depth corresponding to the two-dimensional image waveform can be obtained according to the second corresponding relation, so as to generate corresponding stereoscopic images.

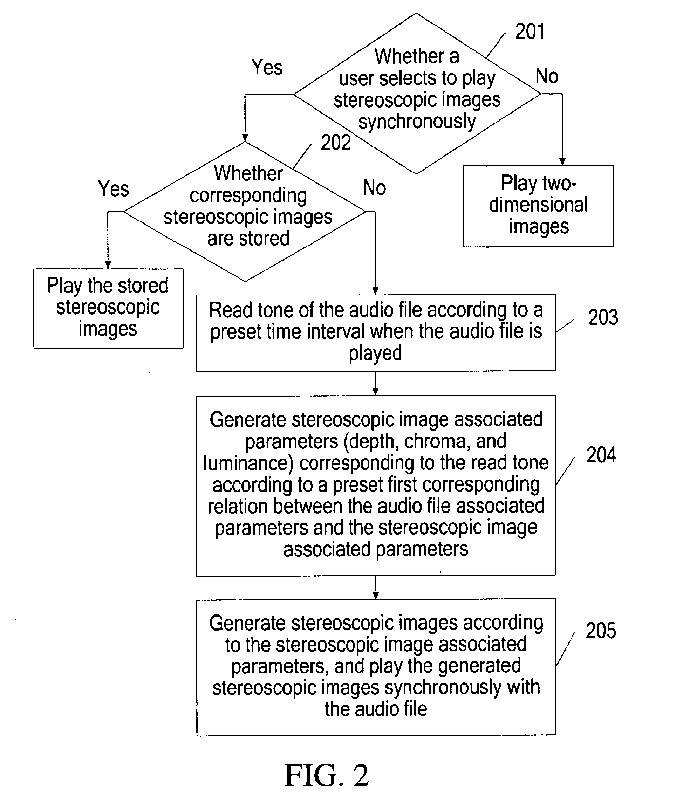

An embodiment of the present invention provides in the following an implementing process of playing stereoscopic images. FIG. 2 is a flow chart of a specific implementation for playing images synchronously with an audio file according to an embodiment of the present invention. Referring to FIG. 2, the implementation includes the following steps.

In Step 201, whether to play stereoscopic images when an audio file is played is determined according to the selection of a user, and if the user selects to play stereoscopic images, Step 202 is performed; if the user selects to play two-dimensional images synchronously, two-dimensional images corresponding to the audio file are directly played for the user, and the current process is ended. The method for playing the two-dimensional images is the same as that in the prior art, so that the details will not be described herein again.

In Step 202, it is determined whether stereoscopic images corresponding to the audio file are pre-stored, and if the stereoscopic images corresponding to the audio file are pre-stored, the stereoscopic images are directly played, and the current process is ended; otherwise, Step 203 is performed.

In Step 203, when the audio file is played, audio file associated parameters are read. In this embodiment, tone is read. Definitely, other associated parameters such as scale may also be read.

In Step 204, stereoscopic image associated parameters corresponding to the read tone are generated according to a preset first corresponding relation between the audio file associated parameters and the stereoscopic image associated parameters. In this embodiment, the stereoscopic image associated parameters include depth, chroma, and luminance. Definitely, other associated parameters such as saturation and contrast may also be read.

The first corresponding relation may be that: a stereoscopic image associated parameter is equal to an audio file associated parameter multiplied by a preset ratio factor. The ratio factor may be automatically generated by a system, and may also be selected by the user. The audio file associated parameter may specifically be scale or tone. The stereoscopic image associated parameter may specifically be depth, chroma, luminance, saturation, or contrast. For example,

$$\text{depth} = \text{K1} \times \text{tone};$$

$$\text{chroma} = \text{K2} \times \text{tone};$$

$$\text{luminance} = \text{K3} \times \text{tone},$$

in which, ratio factors K1, K2, and K3 may be greater than 0.

According to the corresponding relations between the depth, chroma as well as luminance and the tone, after a tone value is read, corresponding depth, chroma, and luminance can be obtained. For example, if the read tone value is 10, when K1 = 2, it can be obtained that corresponding depth = 2 × 10 = 20.

In Step 205, corresponding stereoscopic images are generated according to the depth, chroma, and luminance generated in Step 204, and the stereoscopic images are played synchronously with the audio file.

In other embodiments of the present invention, the corresponding stereoscopic images may also be generated by using the pre-stored two-dimensional images corresponding to the audio file, and the generated stereoscopic images are played synchronously with the audio file. A specific implementation method may be that: stereoscopic images corresponding to the two-dimensional images are generated according to a preset second corresponding relation between two-dimensional image associated parameters and the stereoscopic image associated parameters; and the generated stereoscopic images are played synchronously with the audio file. The two-dimensional image associated parameters may include amplitude of a two-dimensional image waveform; and the stereoscopic image associated parameters include depth, and include luminance, chroma, and contrast.

For example, a preset corresponding relation between depth and waveform amplitude is:

$$\text{depth} = \text{K4} \times \text{waveform amplitude}.$$

If the read waveform amplitude is 10, when it is preset that K4 = 3, it can be obtained that corresponding depth = 3 × 10 = 30.

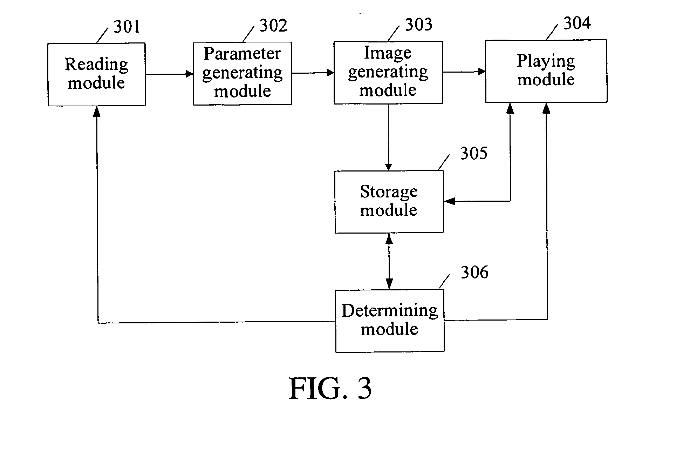

In an embodiment, the present invention further provides a media player for playing images synchronously with an audio file. FIG. 3 is a schematic structural view of a media player for playing images synchronously with an audio file according to an embodiment of the present invention. Referring to FIG. 3, the media player includes a reading module 301, a parameter generating module 302, an image generating module 303, and a playing module 304.

The reading module 301 is adapted to read audio file associated parameters according to a preset time interval when an audio file is played.

The parameter generating module 302 is adapted to generate stereoscopic image associated parameters corresponding to the audio file associated parameters read by the reading module 301 according to a preset first corresponding relation between the audio file associated parameters and the stereoscopic image associated parameters.

The image generating module 303 is adapted to generate stereoscopic images corresponding to the audio file according to the stereoscopic image associated parameters generated by the parameter generating module 302.

The playing module 304 is adapted to play the stereoscopic images generated by the image generating module 303.

The media player may further include a storage module 305 and a determining module 306. The storage module 305 is adapted to store the stereoscopic images generated by the image generating module 303.

The determining module 306 is adapted to determine whether the storage module 305 stores the stereoscopic images corresponding to the audio file when the audio file is played, and if the storage module 305 stores the stereoscopic images corresponding to the audio file, instruct the playing module 304 to play the stereoscopic images; otherwise, instruct the reading module 301 to read the audio file associated parameters.

Based on the above, by reading such associated parameters of an audio file as scale and tone, and generating corresponding stereoscopic image associated parameters according to a corresponding relation between audio file associated parameters and stereoscopic image associated parameters, the method and media player for playing images synchronously with an audio file of the present invention can generate stereoscopic images corresponding to the audio file, and play the stereoscopic images synchronously with the audio file. Furthermore, the method and media player of the present invention can select to play stereoscopic images or two-dimensional images for a user according to the preference of the user.

Persons of ordinary skill in the art may understand that all or part of the steps of the method according to the embodiments of the present invention may be implemented by a program instructing relevant hardware. The program may be stored in a computer readable storage medium, such as a Read-Only Memory (ROM), a Random Access Memory (RAM), a magnetic disk or a Compact Disk Read-Only Memory (CD-ROM).

The foregoing descriptions merely demonstrate the spirit of the present invention, but are not intended to limit the scope of the present invention. Any modification, equivalent replacement, or improvement made without departing from the spirit and principle of the present invention shall fall within the scope of the present invention.

**Claims**

1. A method for playing images synchronously with an audio file, comprising:

   reading audio file associated parameters according to a preset time interval when an audio file is played;
   generating stereoscopic image associated parameters corresponding to the read audio file associated parameters according to a preset first corresponding relation between the audio file associated parameters and the stereoscopic image associated parameters; and
   generating stereoscopic images corresponding to the audio file according to the stereoscopic image associated parameters, and playing the stereoscopic images.

2. The method according to claim 1, wherein the audio file associated parameters comprise at least one of scale and tone.

3. The method according to claim 1, wherein, the stereoscopic image associated parameters comprise depth, and at least one of chroma, luminance, saturation, and contrast.

4. The method according to claim 1, wherein before the reading the audio file associated parameters according to the preset time interval when the audio file is played, the method further comprises:

   determining whether a user requires playing stereoscopic images, and if the user requires playing stereoscopic images, reading the audio file associated parameters.

5. The method according to claim 1, wherein after the generating the stereoscopic images, the method further comprises: storing the stereoscopic images.

**6.** The method according to claim 1, wherein before the reading the audio file associated parameters according to the preset time interval when the audio file is played, the method further comprises:

determining whether stereoscopic images corresponding to the audio file are stored, and if stereoscopic images corresponding to the audio file are stored, playing the stereoscopic images when the audio file is played; otherwise, proceeding to read the audio file associated parameters.

**7.** The method according to claim 6, wherein after determining that the stereoscopic images corresponding to the audio file are not stored, and before reading the audio file associated parameters, the method further comprises: determining whether two-dimensional images corresponding to the audio file are stored, and if two-dimensional images corresponding to the audio file are stored, generating stereoscopic images corresponding to the two-dimensional images according to a preset second corresponding relation between two-dimensional image associated parameters and stereoscopic image associated parameters, and playing the stereoscopic images; otherwise, proceeding to read the audio file associated parameters.

**8.** A media player for playing images synchronously with an audio file, comprising:

a reading module (301), adapted to read audio file associated parameters according to a preset time interval when an audio file is played;
a parameter generating module (302), adapted to generate stereoscopic image associated parameters corresponding to the audio file associated parameters read by the reading module (301) according to a preset first corresponding relation between the audio file associated parameters and the stereoscopic image associated parameters;
an image generating module (303), adapted to generate stereoscopic images corresponding to the audio file according to the stereoscopic image associated parameters generated by the parameter generating module (302); and
a playing module (304), adapted to play the stereoscopic images generated by the image generating module (303).

**9.** The media player according to claim 8, further comprising:

a storage module (305), adapted to store the stereoscopic images generated by the image generating module (303).

**10.** The media player according to claim 9, further comprising:

a determining module (306), adapted to determine whether the storage module stores the stereoscopic images corresponding to the audio file when the audio file is played,
and if the storage module stores the stereoscopic images corresponding to the audio file, instruct the playing module (304) to play the stereoscopic images; otherwise, instruct the reading module (301) to read the audio file associated parameters.

Read audio file associated parameters according to a preset time interval when an audio file is played — 101

Generate stereoscopic image associated parameters corresponding to the audio file associated parameters according to a preset first corresponding relation between the audio file associated parameters and the stereoscopic image associated parameters — 102

Generate stereoscopic images corresponding to the audio file according to the stereoscopic image associated parameters, and play the stereoscopic images — 103

## FIG. 1

Whether a user selects to play stereoscopic images synchronously — 201

Yes

No

Whether corresponding stereoscopic images are stored — 202

Yes

No

Play two-dimensional images

Play the stored stereoscopic images

Read tone of the audio file according to a preset time interval when the audio file is played — 203

Generate stereoscopic image associated parameters (depth, chroma, and luminance) corresponding to the read tone according to a preset first corresponding relation between the audio file associated parameters and the stereoscopic image associated parameters — 204

Generate stereoscopic images according to the stereoscopic image associated parameters, and play the generated stereoscopic images synchronously with the audio file — 205

FIG. 2

301
Reading module

302
Parameter generating module

303
Image generating module

304
Playing module

305
Storage module

306
Determining module

FIG. 3

| INTERNATIONAL SEARCH REPORT | International application No. |
|---|---|
| | PCT/CN2009/071949 |

**A. CLASSIFICATION OF SUBJECT MATTER**

G06T17/00 (2006.01)i

According to International Patent Classification (IPC) or to both national classification and IPC

**B. FIELDS SEARCHED**

Minimum documentation searched (classification system followed by classification symbols)

**IPC:** G06T; G10H; G04B; G09G; G06F; H04N

Documentation searched other than minimum documentation to the extent that such documents are included in the fields searched

Electronic data base consulted during the international search (name of data base and, where practicable, search terms used)

**WPI, EPODOC, PAJ, CNKI, CNPAT:**
3D,THREE DIMENSIONAL,STEREOSCOPIC,3-D,AUDIO,MUSIC,SONG,REPLAY+,PLAY+,PLAYBACK+, DISPLAY+,SHOW+,FILE,PATTERN,MEDIA,BEAT,SCALE,PITCH,DEPTH

**C. DOCUMENTS CONSIDERED TO BE RELEVANT**

| Category* | Citation of document, with indication, where appropriate, of the relevant passages | Relevant to claim No. |
|---|---|---|
| X | US6411289B1(Zimmerman)25 Jun. 2002(25.06.2002) description column 3, line 53- column 10, line 25; figures 1-3 | 1,2,4,6,8 |
| X | US20060156906A1(Haeker)20 Jul. 2006(20.07.2006) description paragraphs 48, 109-122; figure 1 | 1,2,4-6,8-10 |
| A | CN1629889A(CHINESE ACAD INST AUTOMATION)22 Jun. 2005(22.06.2005) the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 24 Aug. 2009(24.08.2009) | **03 Sep. 2009 (03.09.2009)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer FENG,Xuemin Telephone No. (86-10)62411481 |
|---|---|

Form PCT/ISA/210 (second sheet) (April 2007)

## INTERNATIONAL SEARCH REPORT
Information on patent family members

International application No.

PCT/CN2009/071949

| Patent Documents referred in the Report | Publication Date | Patent Family | Publication Date |
|---|---|---|---|
| US6411289B1 | 25.06.2002 | NONE | |
| US20060156906A1 | 20.07.2006 | WO2006078597A2 | 27.07.2006 |
| CN1629889A | 22.06.2005 | NONE | |

Form PCT/ISA/210 (patent family annex) (April 2007)

**REFERENCES CITED IN THE DESCRIPTION**

**Patent documents cited in the description**

- CN 200810098276